# FASCICULE DE BREVET EUROPEEN

(11) **EP 3 538 304 B1**
(45) Date de publication et mention de la délivrance du brevet: **30.09.2020**
(21) Numéro de dépôt: 17808101.4
(22) Date de dépôt: 10.11.2017
(51) Int. Cl.: F01D 5/18, F01D 17/16, B22F 5/04, B22F 1/00, B22F 3/105, B33Y 10/00, B33Y 70/00, B33Y 80/00, C22C 9/06

(54) **PROCÉDÉ DE FABRICATION D'UNE PALE DE TURBOMACHINE**
VERFAHREN ZUR HERSTELLUNG EINER TURBOMASCHINENSCHAUFEL
PROCESS FOR MANUFACTURING A TURBOMACHINE BLADE

(30) Priorité: 10.11.2016 FR 1660907
(43) Date de publication de la demande: 18.09.2019
(73) Titulaire: Safran Helicopter Engines, 64510 Bordes (FR)
(72) Inventeur: DANIS, Yann, 77550 Moissy-Crayamel (FR); BOISSELEAU, Denis, Daniel, Jean, 77550 Moissy-Crayamel (FR)
(74) Mandataire: Regimbeau
(86) Numéro de dépôt international: PCT/FR2017/053070
(87) Numéro de publication internationale: WO 2018/087487

(56) Documents cités:
- FR-A1- 3 028 494
- GB-A- 183 809

## Description

La présente invention est relative à la fabrication de pales de turbomachine, et plus particulièrement à la fabrication de pales de forme interne complexe, et ce plus particulièrement quand ces pales sont également de formes externes complexes.

Elle trouve en particulier avantageusement application dans le cas de pales de compresseur à calage variable du type comportant des cavités internes.

### DOMAINE TECHNIQUE GÉNÉRAL ET ART ANTÉRIEUR

De nombreuses pales de turbomachine, et notamment certaines pales à calage variable de distributeur de compresseur (pales dites IGV ou « Inlet Guide Vane »), peuvent avoir des formes 3D complexes empêchant de les fabriquer d'une pièce.

C'est le cas notamment des pales IGV dans lesquelles on prévoit des cavités intérieures pour la circulation d'air.

Une technique conventionnelle pour fabriquer de telles pales consiste à fabriquer par forgeage les différentes pièces destinées à constituer la forme complète (le corps principal de pale, un couvercle et le bouchon en queue de pale), à usiner des portées et à les assembler par des brasages par induction.

Cette mise en œuvre est complexe et devient d'autant plus impossible en cas de combinaison avec des formes externes complexes aussi.

Elle est en outre toutefois difficilement compatible avec une exploitation industrielle, notamment en termes de tolérances et de coûts.

Les procédés de fonderie, également complexes, ne constituent pas des solutions envisageables, notamment compte tenu des épaisseurs de toile des pales.

Les techniques de moulage par injection métallique (ou « MIM ») supposeraient quant à elles l'injection de plusieurs pièces et un brasage pendant le frittage. Leur utilisation serait encore plus compliquée que l'utilisation de solutions de forge.

On utilise par ailleurs classiquement aujourd'hui dans de nombreux domaines les techniques de fabrication additives.

Toutefois, à ce jour, les solutions proposées par les fabricants de machines de fabrication additive ne sont pas compatibles avec les caractéristiques mécaniques et thermiques attendues pour les pales de turbomachines.

FR3028494A1 divulgue une aube pour turbomachine comprenant une pale à calage variable de distributeur de compresseur de turbomachine, comportant au moins une cavité de circulation d'air, fabriquée par fabrication additive métallique.

GB183809A divulgue un alliage de cuivre et de nickel comportant de 2 à 7% de nickel.

### PRÉSENTATION GÉNÉRALE DE L'INVENTION

Un but de l'invention est de proposer un procédé de fabrication pour des pales de turbomachines de forme interne complexe.

Un autre but de l'invention est de proposer un procédé de fabrication qui soit simple à mettre en œuvre et compatible avec les coûts et niveaux de tolérance attendus dans le cas d'une exploitation industrielle.

Un autre but encore de l'invention est de proposer un procédé qui permette la fabrication de pales qui présentent une bonne conductivité thermique et une bonne résistance à l'abrasion.

En particulier, l'invention propose un procédé de fabrication d'une pale de turbomachine du type présentant au moins une cavité 3D, caractérisé en ce que ladite pale est réalisée par une succession de dépôts et de consolidations sélectives de couches d'une poudre de fabrication additive métallique à base d'un alliage de cuivre et de nickel, ledit alliage comportant de 2 à 7% de nickel, préférentiellement de 2 à 5% et encore plus préférentiellement de l'ordre de 3%.

L'invention concerne également une pale de turbomachine fabriquée de cette façon, ladite pale étant en un matériau à base d'un alliage de cuivre et de nickel, ledit alliage comportant de 2 à 7% de nickel (préférentiellement de 2 à 5% et encore plus préférentiellement de l'ordre de 3%), ce qui lui confère les propriétés mécaniques et thermiques souhaitées.

L'invention trouve avantageusement application dans le cas d'une pale à calage variable de distributeur de compresseur de turbomachine, comportant au moins une cavité de circulation d'air.

### PRÉSENTATION DES FIGURES

D'autres caractéristiques et avantages de l'invention ressortiront encore de la description qui suit, laquelle est purement illustrative et non limitative, et doit être lue en regard de la figure unique annexée sur laquelle on a représenté schématiquement une pale de compresseur de turbomachine.

### DESCRIPTION D'UN OU PLUSIEURS MODES DE MISE EN ŒUVRE ET DE RÉALISATION

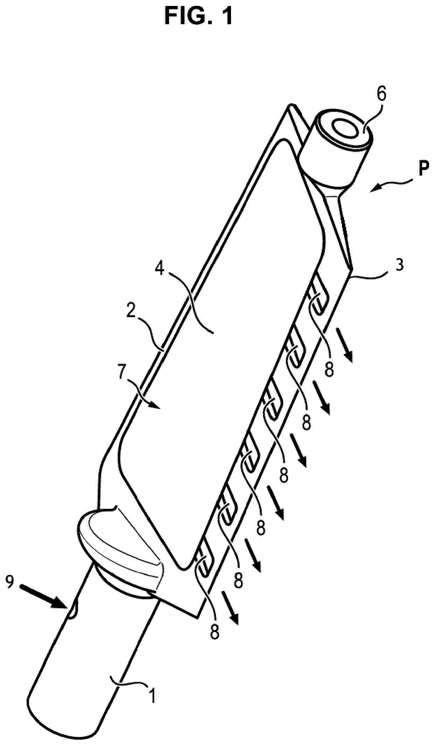

La pale P de la figure 1 est une pale à calage variable de distributeur de compresseur de turbomachine.

Elle s'étend à partir d'un pied 1 et présente un bord d'attaque 2, un bord de fuite 3, en liaison avec un extrados 4 et un intrados. À son extrémité opposée au pied 1, la pale P se termine par une platine cylindrique 6 permettant la fixation articulée de ladite pale P sur un carter de compresseur.

Une cavité 7 s'étend à l'intérieur de la pale, dans la longueur de celle-ci. Cette cavité 7 est destinée à permettre une circulation d'air.

Le pied 1 présente à cet effet un ou plusieurs orifices 9 qui servent d'entrée d'air.

Le bord de fuite 3 présente quant à lui une pluralité d'ouvertures 8 formant sortie d'air. Ces ouvertures 8 ont des formes qui optimisent leur comportement aéronautique (ce qui contribue à complexifier la forme de la pièce).

Une telle pale a par exemple une longueur de 10 cm et une largeur de voile de l'ordre de 4 cm.

La pièce qu'elle constitue est fabriquée en une seule étape, par fabrication additive sur lit de poudre métallique.

On utilise à cet effet des machines de fabrication additive à technologie EBM (« Electron Beam Melting » selon la terminologie anglo-saxonne généralement utilisée) ou encore de fabrication additive par technologie de fusion laser (SLM ou « Selective Laser Melting »).

D'autres technologies de fabrication métallique additive sont également possibles (machines combinant les deux technologies par exemple).

La poudre de fabrication est à base d'un alliage de cuivre et de nickel qui comporte de 2 à 7% de nickel, préférentiellement entre 2 et 5% et notamment encore plus préférentiellement de l'ordre de 3%.

La famille d'alliage Cuivre avec 2 à 7% de Nickel est celle présentant le meilleur compromis entre haute conductivité thermique et bonne tenue à l'érosion. Pour l'application à des pales IGV dans lesquelles on prévoit des cavités intérieures pour la circulation d'air, nous avons besoin d'une bonne conductivité thermique, par exemple pour permettre un dégivrage efficace, ainsi qu'une bonne tenue à l'érosion puisque ses pales sont situées en entrée du moteur et peuvent donc subir de l'érosion par du sable par exemple.

Les couches de poudre sont déposées successivement et consolidées afin de construire la pale couche par couche.

Des paramètres de fabrication préférentiels sont donnés ci-dessous dans le cas d'une fabrication additive par fusion laser :
- Puissance du laser : entre 100 et 500 W, et plus préférentiellement entre 300 et 400 W ;
- Vitesse de balayage du faisceau laser sur les couches de poudre : entre 300 et 2000 mm/s, et plus préférentiellement entre 700 et 1000 mm/s ;
- Écart entre les lignes selon lesquelles le faisceau laser se déplace : entre 0,005 mm et 0,02 mm, et plus préférentiellement entre 0,007 mm et 0,015 mm ;
- Épaisseur des couches de poudre : entre 20 et 40 µm ;
- Granulométrie D50 de la poudre : de l'ordre de 35 µm.

Après fabrication, la pale ainsi réalisée est détachée de la plaque support de la machine.

Après aspiration de la poudre restante, la pale peut faire l'objet de traitement de finition (polissage, voire reprise par usinage de certaines surfaces).

Elle peut également faire l'objet de traitements thermiques complémentaires (traitement de vieillissement à des températures comprises entre 350°C et 620°C, par exemple).

On notera que les pales obtenues - en matériau à base d'un alliage de cuivre et de nickel, ledit alliage comportant de 2 à 7% de nickel - sont particulièrement satisfaisantes en termes de propriétés thermiques et mécaniques : l'alliage est fortement conducteur et présente une forte résistance à l'abrasion.

Le procédé proposé est donc particulièrement adapté dans le cas de pale à cavité de circulation d'air.

En l'absence de brasage, il est simple et peu onéreux. Il permet en outre des tolérances compatibles avec celles attendues dans le milieu de l'aéronautique.

## Revendications

1. Procédé de fabrication d'une pale (P) de turbomachine du type présentant au moins une cavité 3D (7), **caractérisé en ce que** ladite pale est réalisée par une succession de dépôts et de consolidations sélectives de couches d'une poudre de fabrication additive métallique à base d'un alliage de cuivre et de nickel, ledit alliage comportant de 2 à 7% de nickel.

2. Procédé selon la revendication 1, **caractérisé en ce qu'**on met en œuvre une fabrication additive par technologie EBM.

3. Procédé selon l'une des revendications 1 ou 2, **caractérisé en ce qu'**on met en œuvre une fabrication additive par fusion laser.

4. Procédé selon la revendication 3, **caractérisé en ce que** la puissance du laser est comprise entre 100 et 500 W.

5. Procédé selon la revendication 3, **caractérisé en ce que** la vitesse de balayage du faisceau laser sur les couches de poudre est comprise entre 300 et 2000 mm/s.

6. Procédé selon la revendication 3, **caractérisé en ce que** l'écart entre les lignes selon lesquelles le faisceau laser se déplace est compris entre 0,005 mm et 0,02 mm.

7. Procédé selon la revendication 3, **caractérisé en ce que** l'épaisseur des couches de poudre est comprise entre 20 et 40 µm.

8. Procédé selon la revendication 3, **caractérisé en ce que** la granulométrie D50 de la poudre est de l'ordre de 35 µm.

9. Pale (P) de turbomachine, **caractérisée en ce qu'**elle est fabriquée par fabrication additive métallique en mettant en œuvre un procédé selon l'une des revendications précédentes, ladite pale (P) étant en un matériau à base d'un alliage de cuivre et de nickel, ledit alliage comportant de 2 à 7 % de nickel.

10. Pale à calage variable (P) de distributeur de compresseur de turbomachine, comportant au moins une cavité (7) de circulation d'air, **caractérisée en ce qu'**elle est fabriquée par fabrication additive métallique en mettant en œuvre un procédé selon l'une des revendications précédentes, ladite pale (P) étant en un matériau à base d'un alliage de cuivre et de nickel, ledit alliage comportant de 2 à 7% de nickel.

## Patentansprüche

1. Verfahren zur Herstellung einer Turbomaschinenschaufel (P) vom Typ mindestens einen 3-D Hohlraum (7) aufweisend, **dadurch gekennzeichnet, dass** die Schaufel durch eine Aufeinanderfolge von selektiven Abscheidungen und Verfestigungen von Schichten aus einem Pulver aus metallischer additiver Fertigung auf Basis einer Legierung aus Kupfer und Nickel gefertigt ist, wobei die Legierung von 2 bis 7 % an Nickel beinhaltet.

2. Verfahren nach Anspruch 1, **dadurch gekennzeichnet, dass** eine additive Fertigung durch EBM-Technologie umgesetzt wird.

3. Verfahren nach einem der Ansprüche 1 oder 2, **dadurch gekennzeichnet, dass** eine additive Fertigung durch Laserschmelzen umgesetzt wird.

4. Verfahren nach Anspruch 3, **dadurch gekennzeichnet, dass** die Leistung des Lasers zwischen 100 und 500 W enthalten ist.

5. Verfahren nach Anspruch 3, **dadurch gekennzeichnet, dass** die Abtastgeschwindigkeit des Laserstrahls auf den Pulverschichten zwischen 300 und 2 000 mm/s enthalten ist.

6. Verfahren nach Anspruch 3, **dadurch gekennzeichnet, dass** der Abstand zwischen den Linien, entlang derer sich der Laserstrahl bewegt, zwischen 0,005 mm und 0,02 mm enthalten ist.

7. Verfahren nach Anspruch 3, **dadurch gekennzeichnet, dass** die Dicke der Pulverschichten zwischen 20 und 40 µm enthalten ist.

8. Verfahren nach Anspruch 3, **dadurch gekennzeichnet, dass** die Körnung D50 des Pulvers in der Größenordnung von 35 µm ist.

9. Turbomaschinenschaufel (P), **dadurch gekennzeichnet, dass** sie durch metallische additive Fertigung hergestellt wird, indem ein Verfahren nach einem der vorstehenden Ansprüche umgesetzt wird, wobei die Schaufel (P) aus einem Werkstoff auf Basis einer Kupfer- und Nickellegierung ist, wobei die Legierung von 2 bis 7 % Nickel beinhaltet.

10. Schaufel mit variabler Anstellung (P) eines Verdichterverteilers einer Turbomaschine, mindestens einen Luftzirkulationshohlraum (7) beinhaltend, **dadurch gekennzeichnet, dass** sie durch metallische additive Fertigung hergestellt wird, indem ein Verfahren nach einem der vorstehenden Ansprüche umgesetzt wird, wobei die Schaufel (P) aus einem Werkstoff auf Basis einer Kupfer- und Nickellegierung ist, wobei die Legierung von 2 bis 7 % Nickel beinhaltet.

## Claims

1. A process for manufacturing a turbomachine blade (P) of the type having at least one 3D cavity (7), **characterised in that** said blade is produced by a succession of depositions and selective consolidations of layers of a metal additive manufacturing powder based on an alloy of copper and nickel, said alloy including from 2 to 7% of nickel.

2. The process according to claim 1, **characterised in that** an additive manufacturing by EBM technology is implemented.

3. The process according to one of claims 1 or 2, **characterised in that** an additive manufacturing by laser fusion is implemented.

4. The process according to claim 3, **characterised in that** the laser power is comprised between 100 and 500 W.

5. The process according to claim 3, **characterised in that** the scanning speed of the laser beam on the layers of powder is comprised between 300 and 2000 mm/s.

6. The process according to claim 3, **characterised in that** the distance between the lines along which the laser beam displaces is comprised between 0.005 mm and 0.02 mm.

7. The process according to claim 3, **characterised in that** the thickness of the powder layers is comprised between 20 and 40 µm.

8. The process according to claim 3, **characterised in that** the particle size D50 of the powder is of the order of 35 µm.

9. A turbomachine blade (P), **characterised in that** it is manufactured by metal additive manufacturing by implementing a process according to one of the preceding claims, said blade (P) being made of a material based on a copper and nickel alloy, said alloy including from 2 to 7% of nickel.

10. The variable pitch blade (P) of a turbomachine compressor distributor, including at least one air circulation cavity (7), **characterised in that** it is manufactured by metal additive manufacturing by implementing a process according to one of the preceding claims, said blade (P) being made of a material based on a copper and nickel alloy, said alloy including from 2 to 7% of nickel.
